# FASCICULE DE BREVET EUROPEEN

(11) **EP 4 299 293 B1**
(45) Date de publication et mention de la délivrance du brevet: **21.05.2025**
(21) Numéro de dépôt: 23179373.8
(22) Date de dépôt: 15.06.2023
(51) Int. Cl.: B29C 65/34, B29C 65/82, F16L 55/168, B29C 73/34, B29C 73/10, B29C 65/00, F16L 47/03

(54) **PROCÉDÉ DE RÉPARATION PAR CHEMISAGE ET KIT DE RÉPARATION CORRESPONDANT**
VERFAHREN ZUR REPARATUR DURCH AUSKLEIDUNG UND REPARATURKIT DAFÜR
METHOD FOR REPAIRING BY LINING AND CORRESPONDING REPAIR KIT

(30) Priorité: 29.06.2022 FR 2206517
(43) Date de publication de la demande: 03.01.2024
(73) Titulaire: DMPLAST - DECLINAISONS DES MATIERES PLASTIQUES, 26700 Pierrelatte (FR)
(72) Inventeur: MOYA, Salvador, 26700 Pierrelatte (FR)
(74) Mandataire: Cabinet Laurent & Charras

(56) Documents cités:
- EP-B1- 2 488 779
- GB-A- 2 595 711
- US-A1- 2013 133 829

## Description

### Domaine technique

La présente invention concerne un procédé de réparation par chemisage d'un corps creux ou plein en matière plastique, tel que par exemple un conduit ou une canalisation en polyéthylène haute densité (PEHD).

### Technique antérieure

Dans les ouvrages d'art, tel que les ponts, construits en béton précontraint extérieur, certains câbles ou torons de précontrainte sont disposés dans des conduits afin de les protéger des agressions extérieures susceptibles de provoquer leur corrosion. La solution la plus courante consiste à insérer ces câbles dans des conduits en polyéthylène haute densité (PEHD) notamment dans les parties où le câble est libre, c'est-à-dire ne passant pas dans le béton, et un coulis de ciment peut être injecté dans le conduit.

Lorsque ces conduits présentent des défauts ou faiblesses mécaniques, tels que des fissures, différentes solutions de réparation sont proposées, telles que par exemple l'utilisation de manchons thermo-rétractables autour de la portion présentant un défaut, ou l'utilisation de bande de réparation "vulcanisante" couplée à des manchons en inox. Ces solutions de réparation bien qu'économiques et d'exécutions rapides, ne sont pas durables car elles sont sensibles aux vibrations et l'adhérence de ces manchons sur certaines surfaces, notamment sur un conduit en PEHD, reste difficile.

Une autre solution consiste à utiliser des manchons mécaniques inox ou « multi/clamps ». En pratique, l'utilisation de ce type de manchons en milieu encombrant ou difficile d'accès reste très difficile à mettre en œuvre. En effet, cette solution ne permet pas de garantir une étanchéité pérenne du fait du contexte vibratoire associé au coefficient de dilatation élevé. Les solutions de réparations présentées dans les documents EP2488779B1, GB2595711A et US2013/133829A1 ne sont pas optimales.

### Exposé de l'invention

La présente invention vise donc à proposer une solution de réparation pérenne et étanche, adaptée pour la réparation de corps creux ou pleins, en matériau thermoplastique soudable, par exemple en matériau PEHD, et notamment présents dans les ouvrages d'art tel que des ponts réalisés en béton précontraint extérieur.

L'invention a ainsi pour objet un procédé de réparation ou de renforcement, par chemisage d'un corps creux ou plein présentant une zone défectueuse, comprenant :
- délimitation sur la surface extérieure du corps d'une portion à chemiser incluant la zone défectueuse, ledit corps étant matériau thermoplastique soudable ;
- réalisation d'au moins un enroulement d'un fil à électro-souder autour dudit corps sur la portion à chemiser, le fil à électro-souder étant formé d'au moins un fil électrique enrobé dans une gaine en matériau thermoplastique similaire à celui dudit corps ;
- positionnement d'une chemise préformée autour de la portion à chemiser, ladite chemise préformée présentant une section de forme similaire à celui du corps et étant de longueur égale à celle de la portion à chemiser, ladite chemise préformée présentant une ouverture s'étendant sur toute sa longueur, et étant en matériau thermoplastique similaire à celui dudit corps ;
- réalisation d'un électro-soudage de la chemise au corps par application d'un courant électrique à l'enroulement pendant une durée prédéfinie, simultanément à un serrage progressif de la chemise sur le corps.

Selon l'invention, la chemise préformée comprend en outre au moins deux évents, à savoir un évent d'injection et un évent de sortie.

En d'autres termes, le procédé consiste à disposer entre la chemise préformée et le tronçon à chemiser, au moins un enroulement de fil d'électro-soudure autour du corps. L'invention est donc une réparation par chemisage avec électro-soudure transversale, pouvant être mise en œuvre pour des réparations devant intervenir en espace réduit ou difficile d'accès. Le procédé de l'invention permet un scellement durable, étanche et adapté aux contraintes vibratoires des ponts, grâce à la solidarisation, via un enroulement de fil d'électro-soudure, d'une chemise préformée autour du tronçon défectueux. L'unique ouverture longitudinale de la chemise permet notamment un serrage progressif de la chemise autour du tronçon défectueux pendant l'électro-soudure, de manière à bien amalgamer la gaine du fil d'électro-soudure au corps et à la chemise.

En pratique, chaque évent est en saillie sur la surface extérieure de la chemise et peut être configuré ou dimensionné pour permettre par exemple l'introduction d'un produit chimique d'injection des conditions de pressions optimales. Un tel produit d'injection peut être à base de cire pétrolière destiné notamment pour assurer la protection de câbles de précontraintes des tabliers d'ouvrage d'art, par exemple pour limiter les corrosions. Chaque évent peut également être configuré pour permettre l'inspection de l'ouvrage une fois la réparation par chemisage terminée, par exemple via l'injection d'un liquide sous pression pour tester l'étanchéité de la réparation Ces évents peuvent également faciliter la réalisation de tests ultérieurs réguliers du corps réparé au cours de la vie de l'ouvrage.

Par ailleurs, en fonction des applications, la chemise préformée peut comprendre plus de deux évents. Par exemple, le nombre d'évents peut être adapté en fonction de la longueur chemisée, de manière à éviter l'apparition de poches non-injectées ou des déformations de la chemise sous l'effet de la pression d'injection. Ainsi, il est possible de prévoir plusieurs points d'injection en répartissant plusieurs évents le long de la chemise afin de réduire les longueurs à injecter.

La présente invention est particulièrement adaptée pour la réparation de corps creux ou pleins situés en milieu contraint ou encombrant, notamment dans des situations où la mise en œuvre des méthodes standards de soudage plastiques est impossible ou difficilement réalisable.

La fermeture de l'ouverture peut être obtenue par une électro-soudure longitudinale via une baguette d'électro-soudure distincte ou via une partie de l'enroulement par soudure à extrusion.

En pratique, l'enroulement peut être formé d'un enroulement continu ou de plusieurs enroulements distincts et indépendants, en fonction de la longueur et du diamètre de la portion à chemiser ainsi que du matériau thermoplastique.

Selon une variante, l'enroulement est formé d'une unique spirale. En pratique, au moins une spire est localisée à chacune des zones extrêmes de la portion à chemiser, de manière à obtenir une soudure transversale étanche de la chemise sur le corps.

Par exemple, l'enroulement peut être formé d'au moins deux spirales reliées par une portion droite s'étendant sensiblement parallèlement à un axe longitudinal de la portion à chemiser, chaque spirale étant positionnée à une zone d'extrémité de la portion à chemiser et étant formée d'une ou de plusieurs spires, par exemple trois spires, et la portion droite étant destinée à être localisée au niveau de l'ouverture longitudinale de la chemise. Ainsi, il est possible de réaliser simultanément des soudures transversale et longitudinale. L'enroulement peut également comprendre une ou plusieurs spirales intermédiaires entre les deux spirales positionnées aux zones d'extrémité de la portion à chemiser.

Selon une autre variante, l'enroulement est formé d'au moins deux spirales indépendantes l'une de l'autre, au moins chaque zone d'extrémité de la portion à chemiser étant pourvue d'une des deux spirales et chaque spirale étant formée d'une ou de plusieurs spires, par exemple trois spires. L'enroulement peut également comprendre une ou plusieurs spirales intermédiaires indépendantes disposées entre les deux spirales positionnées aux zones d'extrémité de la portion à chemiser. Ainsi, l'enroulement est réalisé avec plusieurs fils d'électro-soudure, les extrémités de chaque spirale devant ainsi être connectées à une source électrique. En d'autres termes, les spirales sont connectées de manière à former un circuit en parallèle.

De préférence, les spires de chaque spirale sont jointives, c'est-à-dire que les spires adjacentes se touchent mais ne se croisent pas entre elles, et les extrémités de l'enroulement ou de chaque spirale devant être connectées à une alimentation électrique sont espacées d'au moins une distance prédéfinie, pour éviter un court-circuit.

En pratique, le corps peut présenter une section circulaire, carrée, triangulaire ou autre. Par exemple, le corps peut être cylindrique. L'invention peut notamment être mise en œuvre pour la réparation sur ouvrage d'art, tel que ponts avec précontrainte extérieure, ou encore sur les conduits de générateur de vapeur des réacteurs nucléaires à eau sous pression, ou sur des canalisations de distribution de fluide réalisées matériau thermoplastique.

Avantageusement, le corps peut être en polyéthylène haute densité (PEHD), en polyuréthane, en polychlorure de vinyle (PVC), en polyamide ou à base de polymères type ABS.

L'invention a également pour objet un kit de réparation ou de renforcement, par chemisage d'un corps creux ou plein présentant une zone défectueuse, comprenant au moins :
- un ou plusieurs tronçons de fils à électro-souder, chaque fil à électro-souder étant formé d'au moins d'un fil électrique enrobé dans une gaine en matériau thermoplastique similaire à celui dudit corps ;
- une chemise préformée présentant une section de forme similaire à celui du corps et étant de longueur égale à celle de la portion à chemiser, ladite chemise préformée présentant une ouverture s'étendant sur toute sa longueur, et étant en matériau thermoplastique similaire à celui dudit corps, la chemise préformée comprenant en outre au moins deux évents, à savoir un évent d'injection et un évent de sortie.

### Brève description des figures

D'autres caractéristiques et avantages de l'invention ressortiront clairement de la description qui en est faite ci-après, à titre indicatif et nullement limitatif, en référence aux dessins annexés, dans lesquels :
La figure 1 est une représentation schématique d'un fil à électro-souder et d'une chemise préformée pour la réparation d'un conduit selon un mode de réalisation.
La figure 2 est un diagramme présentant les principales étapes de réparation chemisage et électro-soudage selon un mode de réalisation.
La figure 3A est une représentation schématique d'un enroulement de fils d'électro-soudure selon une variante.
La figure 3B est une représentation schématique d'un enroulement de fils d'électro-soudure selon une autre variante.
La figure 4 est une représentation schématique d'un enroulement de fils d'électro-soudure selon une autre variante.
La figure 5A est une représentation schématique d'un enroulement de fils d'électro-soudure selon une autre variante.
La figure 5B est une représentation schématique d'un enroulement de fils d'électro-soudure selon une autre variante.
La figure 6 est une représentation schématique d'un conduit après réparation par chemisage.
La figure 7 est une représentation schématique d'une portion d'un conduit recouvert par une chemise préformée de réparation intégrant deux évents, selon un mode de réalisation.
La figure 8 est une représentation schématique d'une portion d'un conduit recouvert par une chemise préformée de réparation intégrant deux évents, selon un autre mode de réalisation.
La figure 9 est une représentation schématique d'une portion d'un conduit recouvert par une chemise préformée de réparation intégrant trois évents, selon un autre mode de réalisation.

### Mode(s) de réalisation de l'invention

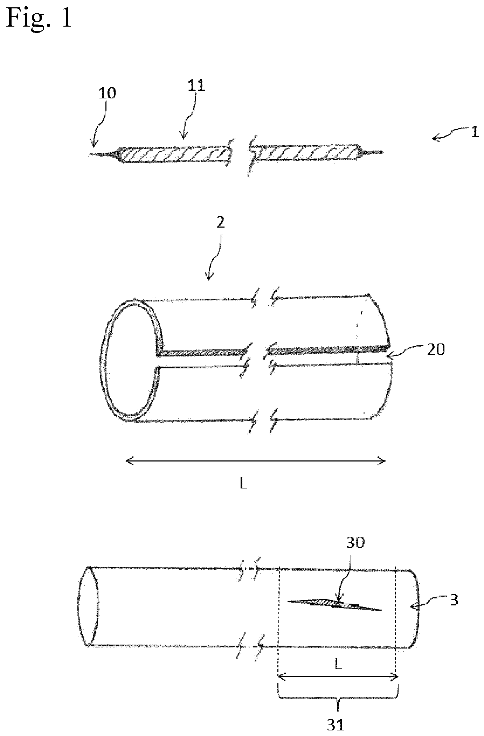

En référence à la figure 1, un kit de réparation ou de renforcement, par chemisage d'un corps **3** creux ou plein, par exemple un conduit cylindrique, présentant une zone défectueuse **30,** se compose d'au moins d'un ou de plusieurs tronçons de fils à électro-souder **1** et d'une chemise **2** préformée.

Chaque fil à électro-souder **1** est formé d'au moins d'un fil électrique **10** enrobé dans une gaine **11** en matériau thermoplastique similaire à celui du conduit à chemiser. Le fil **3** d'électro-soudage peut notamment être sous la forme d'une tige thermoplastique flexible, par exemple d'environ 5 mm de diamètre, intégrant plusieurs fils électriques enroulés à l'intérieur d'une gaine en matériau thermoplastique de composition similaire à celui du corps **3** ou du moins de la zone défectueuse **30.**

La chemise **2** préformée présente une section de forme similaire à celui du conduit et est de longueur **L** égale à celle de la portion à chemiser. La chemise **2** préformée présente une ouverture **20** longitudinale s'étendant sur toute la longueur **L** de la chemise **2,** et est en matériau thermoplastique de composition similaire à celui du conduit.

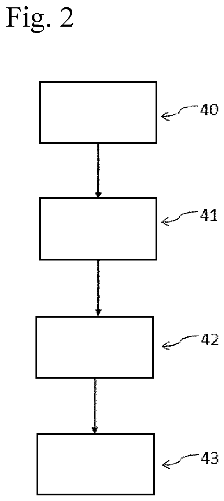

En référence à la figure 2, un procédé de réparation ou de renforcement par chemisage du conduit **3** selon un mode de réalisation, comprend :
- la délimitation **40** sur la surface extérieure du conduit **3** d'une portion à chemiser **31** incluant la zone défectueuse **30** ;
- réalisation **41** d'un enroulement avec au moins un fil à électro-souder **1** autour du conduit sur la portion à chemiser **31 ;**
- positionnement **42** de la chemise **2** préformée autour de la portion à chemiser **31 ;**
- réalisation **43** de l'électro-soudage de la chemise **2** au conduit **3** par application d'un courant électrique à l'enroulement pendant une durée prédéfinie, et un serrage progressif de la chemise **2** sur le conduit **3** pendant l'électro-soudure.

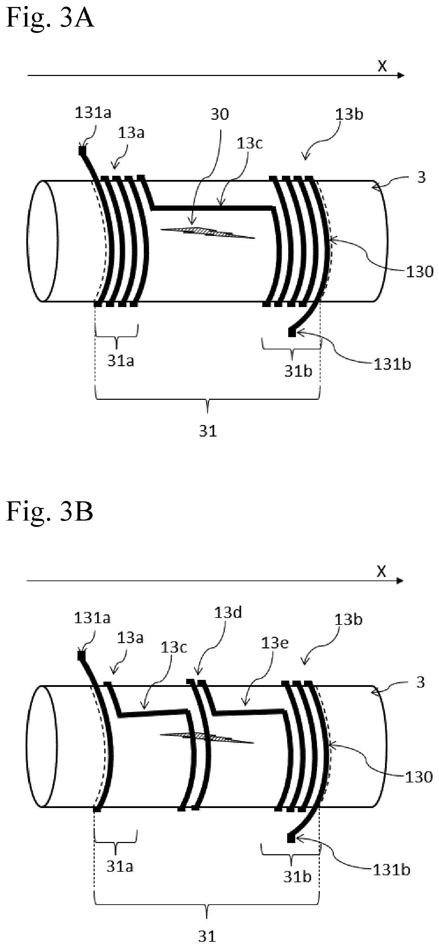

Différents exemples de motifs d'enroulements des fils d'électro-soudure sont illustrés aux figures 3A à 5B.

Sur la figure 3A, un fil d'électro-soudure est enroulé autour de la zone à chemiser **31** L'enroulement est notamment formé de deux spirales **14a, 14b** reliées par une portion sensiblement droite **13c** s'étendant longitudinalement suivant un axe longitudinale **X** de la portion à chemiser **31.** Chacune des spirales **13a, 13b** est positionnée à une zone d'extrémité **31a, 31b** de la portion à chemiser **31** et est formée d'une ou de plusieurs spires **130.** La portion droite **13c** est positionnée pour être de préférence localisée au niveau de l'ouverture **30** longitudinale de la chemise **3.** Ainsi, il est possible de réaliser simultanément des soudures transversale et longitudinale. Dans cette variante, la connexion électrique est réalisée aux deux extrémités **131a** et **131b.** Sur la figure 3B, l'enroulement peut également comprendre une spirale intermédiaire **13d** entre les deux spirales **13a** et **13b** et reliés par des portion sensiblement droites **13c** et **13d.**

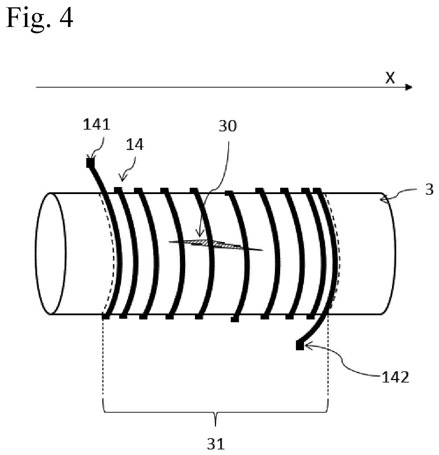

Sur la figure 4, un fil d'électro-soudure est enroulé autour de la zone à chemiser **31** pour former une unique spirale **14,** et l'électro-soudage est réalisé par connexion des extrémités **141, 142 de** la spirale **14** à une alimentation électrique.

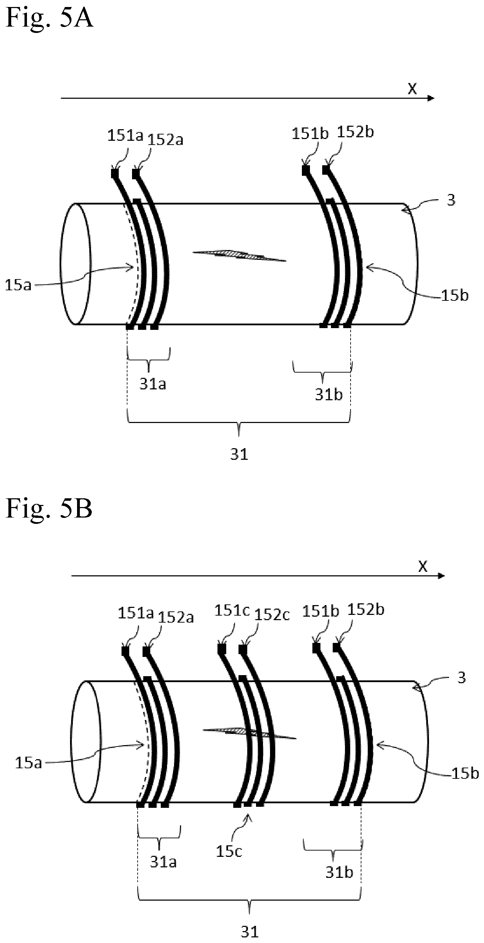

Sur la figure 5A, l'enroulement est formé d'une première spirale **15a** et d'une deuxième spirale **15b** indépendante de la première spirale **15a.** La première spirale **15a** est positionnée au niveau d'une première zone d'extrémité **31a** de la portion à chemiser **31,** et la deuxième spirale **15b** est positionnée au niveau d'une deuxième zone d'extrémité **31b** de la portion à chemiser **31.** Les première et deuxième spirales **15a, 15b** sont formées chacune d'une ou de plusieurs spires. Dans cette variante, la connexion électrique est réalisée aux extrémités **151a, 152a, 151b** et **151b** de chacune des première et deuxième spirales **15a, 15b.** Par ailleurs, comme illustré à la figure 5B, en fonction de la longueur du chemisage, il est également possible de prévoir une ou plusieurs spirales intermédiaires **15c.**

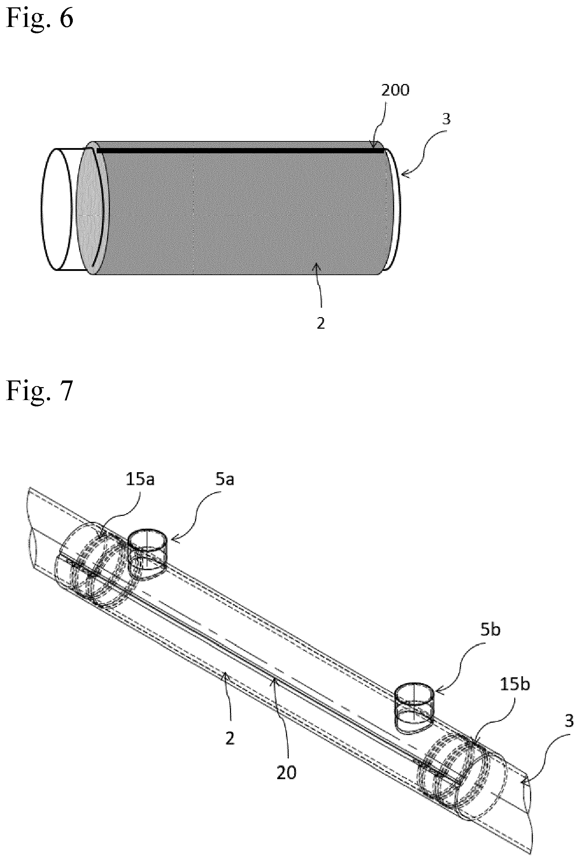

Sur la figure 6, la chemise est positionnée pour recouvrir l'enroulement et la zone à chemiser et un électro-soudage de la chemise **2** au corps **3** est réalisé par application d'un courant électrique à l'enroulement pendant une durée prédéfinie, accompagné d'un serrage progressif de la chemise **2** sur le corps **3,** de manière à fusionner le fil d'électro-soudure à la chemise et au corps pour assurer une adhésion des différentes pièces entre elles et une étanchéité de l'ensemble.

En pratique, après l'étape d'électro-soudure transversale, il est également possible de réaliser une étape d'électro-soudure longitudinale via une baguette d'électro-soudure positionnée au niveau de l'ouverture **20** de la chemise **2** pour réaliser un scellement **200** de cette ouverture.

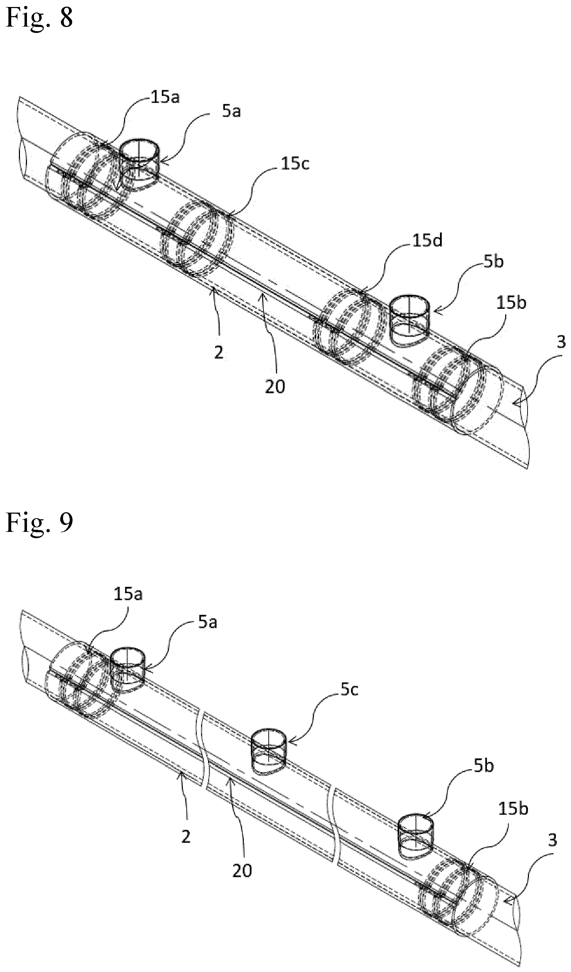

Enfin, pour permettre l'injection de produit à base de cire pétrolière de protection ou pour permettre l'injection d'une pression afin de tester l'étanchéité de la réparation, la chemise préformée est avantageusement pourvue d'au moins deux évents, par exemple deux évents **5a-5b** (figures 7 et 8) ou par exemple trois évents **5a-5c** (figure 9), chacun faisant office d'évent d'injection ou d'évent de sortie. Le nombre d'évents répartis le long de la chemise permet de réduire les longueurs à injecter. En outre, comme mentionnée ci-avant, en fonction de la longueur de la portion du conduit 3 à réparer, l'enroulement peut être formé de deux spirales indépendantes **15a-15b** (figure 7) ou de plusieurs spirales indépendantes **15a-15c** (figure 8).

La solution de la présente invention est notamment adaptée pour une réparation d'un conduit cylindrique de diamètre allant de quelques centimètres jusqu'à plusieurs mètres de diamètres. De même, la chemise préformée utilisée peut présenter une épaisseur de quelques millimètres et une longueur allant de quelques centimètres à plusieurs mètres. En outre, la chemise peut être réalisée à partir de tube, plaque ou film, et comprend des évents d'injection peu importe sa longueur ou son épaisseur.

Les paramètres relatifs à la durée d'électro-soudure, aux tensions et courants à appliquer dépendent des caractéristiques du fil à électro-souder fournies généralement par le fabriquant du fil à électro-souder, des dimensions de la chemise, du motif d'enroulement et du matériau thermoplastique.

## Revendications

1. Procédé de réparation ou de renforcement, par chemisage d'un corps (3) creux ou plein présentant une zone défectueuse (30), comprenant:
- délimitation (40) sur la surface extérieure du corps (3) d'une portion à chemiser (31) incluant la zone défectueuse (30), ledit corps (3) étant matériau thermoplastique soudable ;
- réalisation (41) d'au moins un enroulement d'un fil à électro-souder (1) autour dudit corps (3) sur la portion à chemiser (31), le fil à électro-souder (1) étant formé d'au moins un fil conducteur électrique (10) enrobé dans une gaine (11) en matériau thermoplastique similaire à celui dudit corps (3) ;
- positionnement (42) d'une chemise préformée (2) autour de la portion à chemiser (31), ladite chemise préformée (2) présentant une section de forme similaire à celui du corps (3) et étant de longueur (L) égale à celle de la portion à chemiser (31), ladite chemise préformée (2) présentant une ouverture (20) s'étendant sur toute sa longueur, et étant en matériau thermoplastique similaire à celui dudit corps (3) ; et
- réalisation (43) de l'électro-soudage de la chemise (2) au corps (3) par application d'un courant électrique à l'enroulement pendant une durée prédéfinie, simultanément à un serrage progressif de la chemise (2) sur le corps (3) ;
**caractérisée en ce que** la chemise (2) préformée comprend en outre au moins un évent d'injection (a) et un évent de sortie (5b).

2. Procédé de réparation selon la revendication 1, dans lequel la fermeture de l'ouverture (20) est obtenue par une électro-soudure longitudinale d'une baguette d'électro-soudure ou via l'enroulement.

3. Procédé de réparation selon la revendication 1, dans lequel l'enroulement est formé d'une spirale (14), et au moins une spire est localisée à chacune des zones d'extrémité de la portion à chemiser, de manière à obtenir une soudure transversale étanche de la chemise sur le corps.

4. Procédé de réparation selon la revendication 3, dans lequel l'enroulement est formé d'au moins deux spirales (13a, 13b) reliées par une portion droite (13c) s'étendant sensiblement parallèlement à un axe longitudinal (X) de la portion à chemiser (31), chaque spirale (13a, 13b) étant positionnée à une extrémité de la portion à chemiser (31) et étant formée d'une ou de plusieurs spires, et la portion droite (13c) étant destinée à être localisée au niveau de l'ouverture (20) longitudinale de la chemise (2).

5. Procédé de réparation selon la revendication 3, dans lequel l'enroulement est formé d'au moins deux spirales (15, 15b) indépendantes l'une de l'autre, au moins chaque zone d'extrémité (31a, 31b) de la portion à chemiser (31) étant pourvue d'une des deux spirales (15a, 15b) et chaque spirale étant formée d'une ou de plusieurs spires.

6. Procédé de réparation selon la revendication 5, dans lequel l'enroulement comprend en outre une ou plusieurs spirales intermédiaires (15c) indépendantes disposées entre lesdites deux spirales (15a, 15b).

7. Procédé de réparation selon l'une des revendications 1 à 6, dans lequel les spires de chaque spirale sont jointives.

8. Procédé de réparation selon l'une des revendications 1 à 7, dans lequel le corps (3) est un conduit dans lequel passe des câbles ou des torons de précontrainte extérieure présents dans un pont.

9. Kit de réparation ou de renforcement, par chemisage d'un corps (3) creux ou plein présentant une zone défectueuse (30), comprenant au moins:
- un ou plusieurs fils (1) à électro-souder, chaque fil à électro-souder étant formé d'au moins d'un fil conducteur électrique (10) enrobé dans une gaine (11) en matériau thermoplastique similaire à celui dudit corps (3) ;
- une chemise (2) préformée présentant une section de forme similaire à celui du corps (3) et étant de longueur égale à celle de la portion à chemiser (31), ladite chemise (2) préformée présentant une ouverture (20) s'étendant sur toute sa longueur, et étant en matériau thermoplastique similaire à celui dudit corps (3),
**caractérisé en ce que** la chemise (2) préformée comprend en outre au moins un évent d'injection (5a) et un évent de sortie (5b).

## Patentansprüche

1. Verfahren zur Reparatur oder Verstärkung durch Auskleidung eines Hohl- oder Vollkörpers (3), der einen defekten Bereich (30) aufweist, das folgende Schritte umfasst:
- Abgrenzung (40) auf der Außenfläche des Körpers (3) eines auszukleidenden Abschnitts (31), der den defekten Bereich (30) einschließt, wobei der Körper (3) aus einem schweißbaren thermoplastischen Material besteht;
- Durchführung (41) mindestens einer Wicklung eines Elektroschweißdrahts (1) rund um diesen Körper (3) auf dem auszukleidenden Abschnitt (31), wobei der Elektroschweißdraht (1) aus mindestens einem elektrischen Leiterdraht (10) besteht, der in eine Hülle (11) aus thermoplastischem Material eingebettet ist, das dem des Körpers (3) ähnlich ist;
- Positionierung (42) einer vorgeformten Auskleidung (2) rund um den auszukleidenden Abschnitt (31), wobei die vorgeformte Auskleidung (2) einen Abschnitt mit einer ähnlichen Form wie die des Körpers (3) aufweist und eine Länge (L) hat, die der des auszukleidenden Abschnitts (31) entspricht, wobei die vorgeformte Auskleidung (2) eine Öffnung (20) aufweist, die sich über ihre gesamte Länge erstreckt, und aus einem thermoplastischen Material besteht, das dem des Körpers (3) ähnlich ist, und
- Durchführung (43) der Elektroschweißung der Auskleidung (2) an den Körper (3) durch Anlegen eines elektrischen Stroms an die Wicklung während einer vordefinierten Dauer, gleichzeitig mit einem progressiven Festziehen der Auskleidung (2) auf dem Körper (3);
**dadurch gekennzeichnet, dass** die vorgeformte Auskleidung (2) ferner mindestens eine Einspritzöffnung (a) und eine Auslassöffnung (5b) umfasst.

2. Reparaturverfahren zur nach Anspruch 1, bei dem das Verschließen der Öffnung (20) durch Längsschweißen eines Elekroschweißstabs oder durch Wicklung erfolgt.

3. Reparaturverfahren nach Anspruch 1, bei dem die Wicklung aus einer Spirale (14) besteht und sich mindestens eine Windung an jedem der Endbereiche des auszukleidenden Abschnitts befindet, so dass eine dichte Querverschweißung der Auskleidung auf dem Körper erhalten wird.

4. Reparaturverfahren nach Anspruch 3, bei dem die Wicklung aus mindestens zwei Spiralen (13a, 13b) gebildet wird, die durch einen geraden Abschnitt (13c) verbunden sind, der sich im Wesentlichen parallel zu einer Längsachse (X) des auszukleidenden Abschnitts (31) erstreckt, wobei jede Spirale (13a, 13b) an einem Ende des auszukleidenden Abschnitts (31) positioniert ist und aus einer oder mehreren Windungen besteht, und der gerade Abschnitt (13c) dazu bestimmt ist, sich im Bereich der Längsöffnung (20) der Auskleidung (2) zu befinden.

5. Reparaturverfahren nach Anspruch 3, bei dem die Wicklung aus mindestens zwei voneinander unabhängigen Spiralen (15, 15b) gebildet wird, wobei mindestens jeder Endbereich (31a, 31b) des auszukleidenden Abschnitts (31) mit einer der beiden Spiralen (15a, 15b) versehen ist und jede Spirale aus einer oder mehreren Windungen gebildet ist.

6. Reparaturverfahren nach Anspruch 5, bei dem die Wicklung ferner eine oder mehrere unabhängige, zwischen den beiden Spiralen (15a, 15b) angeordnete Zwischenspiralen (15c) umfasst.

7. Reparaturverfahren nach einem der Ansprüche 1 bis 6, bei dem die Windungen jeder Spirale aneinander anliegen.

8. Reparaturverfahren nach einem der Ansprüche 1 bis 7, bei dem der Körper (3) ein Leitungsrohr ist, in dem Kabel oder Litzen zur externen Vorspannung verlaufen, die in einer Brücke vorhanden sind.

9. Kit zur Reparatur oder Verstärkung durch Auskleidung eines Hohl- oder Vollkörpers (3), der einen defekten Bereich (30) aufweist, das mindestens umfasst:
- einen oder mehrere Elektroschweißdrähte (1), wobei jeder Elektroschweißdraht (1) aus mindestens einem elektrischen Leiterdraht (10) besteht, der in eine Hülle (11) aus thermoplastischem Material eingebettet ist, das dem des Körpers (3) ähnlich ist
- eine vorgeformte Auskleidung (2), die einen Abschnitt mit einer ähnlichen Form wie die des Körpers (3) aufweist und eine Länge hat, die der des auszukleidenden Abschnitts (31) entspricht, wobei die vorgeformte Auskleidung (2) eine Öffnung (20) aufweist, die sich über ihre gesamte Länge erstreckt, und aus einem thermoplastischen Material besteht, das dem des Körpers (3) ähnlich ist,
**dadurch gekennzeichnet, dass** die vorgeformte Auskleidung (2) ferner mindestens eine Einspritzöffnung (5a) und eine Auslassöffnung (5b) umfasst.

## Claims

1. A method for repairing or reinforcing, by lining, a hollow or solid body (3) having a defective area (30), comprising the steps consisting in:
- delimiting (40) on the outer surface of the body (3) a portion to be lined (31) including the defective area (30), said body (3) being made of a weldable thermoplastic material;
- forming (41) at least one winding of an electro-welding wire (1) around said body (3) on the portion to be lined (31), the electro-welding wire (1) being formed of at least one electrically conductive wire (10) embedded in a sheath (11) made of a thermoplastic material similar to that of said body (3)
- positioning (42) a preformed liner (2) around the portion to be lined (31), said preformed liner (2) having a section of a shape similar to that of the body (3) and being of a length (L) equal to that of the portion to be lined (31), said preformed liner (2) having an opening (20) extending over its entire length, and being made of a thermoplastic material similar to that of said body (3) and
- performing (43) an electro-welding of the liner (2) to the body (3) by applying an electric current to the winding for a predefined time, simultaneously with a gradual clamping of the liner (2) on the body (3);
**characterised in that** the preformed liner (2) further comprises at least one injection vent (a) and one outlet vent (5b).

2. The repairing method according to claim 1, wherein the closure of the opening (20) is obtained by a longitudinal electro-welding of an electro-welding rod or via the winding.

3. The repairing method according to claim 1, wherein the winding is formed of a coil (14), and at least one turn is located at each of the end areas of the portion to be lined, so as to obtain a sealed transverse weld of the liner on the body.

4. The repairing method according to claim 3, wherein the winding is formed by at least two coils (13a, 13b) connected by a straight portion (13c) extending substantially parallel to a longitudinal axis (X) of the portion to be lined (31), each coil (13a, 13b) being positioned at an end of the portion to be lined (31) and being formed of one or more turns, and the straight portion (13c) being intended to be located at the longitudinal opening (20) of the liner (2).

5. The repairing method according to claim 3, wherein the winding is formed by at least two spirals (15, 15b) independent of each other, at least each end area (31a, 31b) of the portion to be lined (31) being provided with one of the two coils (15a, 15b) and each coil being formed by one or more turns.

6. The repairing method according to claim 5, wherein the winding further comprises one or more independent intermediate coils (15c) arranged between said two coils (15a, 15b).

7. The repairing method according to any one of claims 1 to 6, wherein the turns of each coil are contiguous.

8. The repairing method according to any one of claims 1 to 7, wherein the body (3) is a duct through which external pre-stressing cables or strands present in a bridge pass.

9. A repairing or reinforcing kit, by lining a hollow or solid body (3) having a defective area (30), comprising at least:
- one or more wires (1) to be electro-welded, each wire to be electro-welded being formed by at least one electrically conductive wire (10) embedded in a sheath (11) made of a thermoplastic material similar to that of said body (3)
- a preformed liner (2) having a section of a shape similar to that of the body (3) and being of a length equal to that of the portion to be lined (31), said preformed liner (2) having an opening (20) extending over its entire length, and being made of a thermoplastic material similar to that of said body (3),
**characterised in that** the preformed liner (2) further comprises at least one injection vent (5a) and one outlet vent (Sb).
